# EUROPEAN PATENT SPECIFICATION

(11) **EP 2 217 816 B1**
(45) Date of publication and mention of the grant of the patent: **07.05.2014**
(21) Application number: 08855202.1
(22) Date of filing: 24.11.2008
(51) Int. Cl.: F02F 11/00

(54) **PISTON ENGINE**
KOLBENMOTOR
PISTON MOTEUR

(30) Priority: 26.11.2007 FI 20075837
(43) Date of publication of application: 18.08.2010
(73) Proprietor: Wärtsilä Finland Oy, 65380 Vaasa (FI)
(72) Inventor: LILJENFELDT, Gösta, FI-65450 Solf (FI); SÄRS, Harry, FI-65100 Vasa (FI); NYNÄS, Håkan, FI-65280 Vasa (FI); SUNDSTEN, Magnus, FI- 65610 Korsholm (FI)
(74) Representative: Berggren Oy Ab
(86) International application number: PCT/FI2008/050678
(87) International publication number: WO 2009/068737

(56) References cited:
- DE-C- 624 729
- DE-C- 661 711
- DE-C- 916 608
- US-A- 2 060 593
- US-A- 4 338 054

## Description

The invention relates to a piston engine according to the preamble of claim 1.

In engines, such as in diesel engines, the task of the cylinder head is to close the upper end of the cylinder liner and form the upper part of the combustion chamber, Cylinder heads are fastened in place by means of fastening Screws. In order to ensure a gas-tight joint there has to be a sufficient number of fastening screws placed around the cylinder at as regular intervals as possible. The nuts of the fastening screws are tightened in an order and in phases given separately for each engine as well as with given tightening torques. In larger diesel engines the tightening of the nuts of the fastening screws for cylinder heads often takes place hydraulically, whereby the fastening screws will be provided with a precisely desired force.

The type of the fastening screw for a cylinder head is a so-called tension screw, which differs from an ordinary screw in such a way that its shank is for a given free length machined thinner than the screw ends. The length of this extension part is defined with respect to the dimensions of the thread so that, when tightening the screw up to the yield point of its material, the yielding occurs in the shank of the screw and the nominal stress in the cross-sectional surface of the thread is not allowed to exceed a permissible value. The shank of the screw is smooth-machined and the transition points are rounded with a suitable radius. The tension screws are manufactured of high-class alloy steels and they are used when high transition loads are exerted on the screw. A problem in the prior art solutions is the vibration of fastening screws during the engine run and the damages to the screws due to the vibration. Similar problems also occur in other fastening screws used in piston engines.

US 4 338 054 discloses a metal fastener, such as a duct bolt. The fasterner has an externally threaded portion and a non-threaded shank part whose axially transverse cross sectional area is reduced below the stress area of the threads of the threaded part of the fastener. On tightening the fastener to failure, the failure occurs in the reduced part of the shank. The reduced part can have various cross sectional shapes.

DE 661 711 discloses a bolt having a shank with a reduced and sharp-edged cross section.

An object of this invention is to provide an improved piston engine.

The object according to the invention is achieved by a piston engine according to claim 1.

Due to the cross-sectional shape of the shank deviating from a circle, the natural frequency of the fastening screw may be made unequal to, i.e. higher and/or lower than, the excitation frequencies occurring in a piston engine, especially the excitation frequencies occurring commonly in a piston engine that runs at medium speed. Consequently, the vibration of the fastening screw is small and thus also the damages caused by the vibration are minor.

In the following the invention is explained by way of example with reference to the appended schematic drawings, of which
Figure 1 shows a fastening screw;
Figures 2a - 2d show various embodiments of the fastening screw according to Figure 1 as a cross-section A-A;
Figure 3a shows a second fastening screw;
Figure 3b shows the fastening screw according to Figure 3a as a cross-section;
Figure 4a shows a cylinder head for a piston engine attached to an engine block with a fastening screw;
Figure 4b shows a cylinder head for a piston engine attached to an engine block with a fastening screw;
Figure 5a shows a third fastening screw;
Figure 5b shows a cylinder head for a piston engine attached to an engine block with a fastening screw according to Figure 5a.

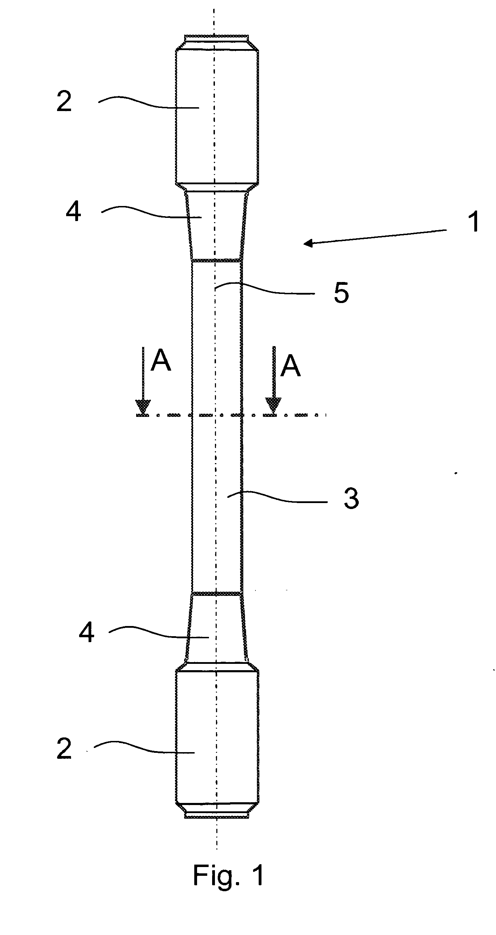

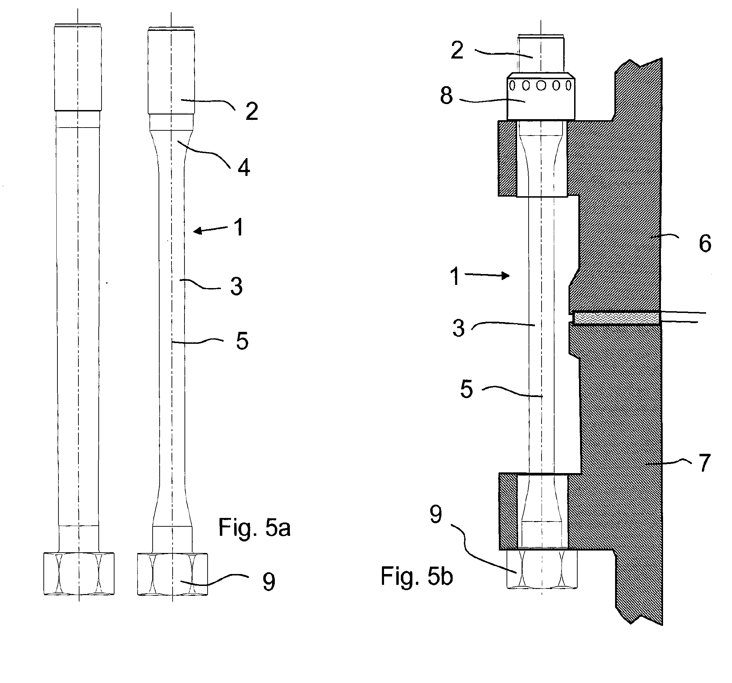

Figure 1 shows one fastening screw 1 according to the invention for a cylinder head in a piston engine. The cylinder head of the piston engine is attached to an engine block by means of fastening screws 1. The type of the fastening screw 1 is a so-called stud bolt, i.e. its both end sections 2 are provided with threads. The cross-sectional shape of the end sections 2 is circular. A shank 3 is provided between the end sections 2. The shank 3 is unthreaded. The shank 3 forms a so-called extension part, whereby yielding occurs in the shank 3, when the fastening screw 1 is tightened up to the yield point of its material. Thus, the nominal tension in the cross-sectional surface of the threads of the end sections is not allowed to exceed a permissible value. The cross-sectional shape of the shank 3 deviates from a circle or deviates essentially from a circle. The shank 3 is solid. Between the shank 3 and both end sections 2 there is a transition area 4, by means of which the various shapes and sizes of the shank 3 and the end section 2 are joined together. The fastening screw 1 is a one-part screw. The fastening screw 1 is made, e.g., of austenitic steel. The length of the fastening screw 1 is typically 50 - 150 mm. Optionally, the fastening screw 1 may be provided with a screw head, whereby one end section of the screw is provided with a thread and the other end section with a head, e.g. with a hexagon head (Figures 5a and 5b).

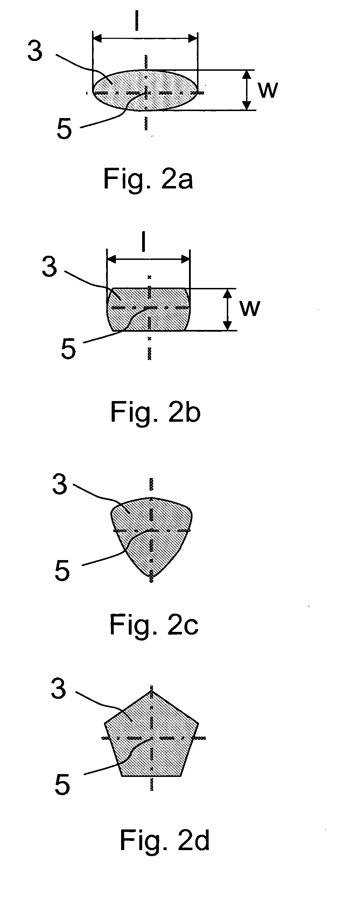

Figures 2a - 2d show preferable cross-sectional shapes of the shank of the fastening screw according to Figure 1. In these embodiments, the cross-sectional area of the shank 3 is smaller than the cross-sectional area of the end section 2. The cross-sectional shape of the shank 3 deviates from a head, whereby one end section of the screw is provided with a thread and the other end section with a head, e.g. with a hexagon head (Figures 5a and 5b).

Figures 2a - 2d show preferable cross-sectional shapes of the shank of the fastening screw according to Figure 1. In these embodiments, the cross-sectional area of the shank 3 is smaller than the cross-sectional area of the end section 2. The cross-sectional shape of the shank 3 deviates from a circle or deviates essentially from a circle. The shape of the cross-section is constant over the entire length of the shank 3. The cross-sectional shape of the shank 3 may be unsymmetrical with respect to the longitudinal axis 5 (middle axis) of the fastening screw.

The cross-sectional shape of the shank 3 is such that the bending stiffness of the fastening screw 1 in various cross directions is unequal. In one direction, the bending rigidity of the shank 3 is smaller than that of a shank with a cross-sectional area of the same size and a circular cross-section. Then, the natural frequency of the fastening screw 1 is lower than the resonance frequency occurring normally in a piston engine. In another direction, perpendicular to the first direction, the bending rigidity of the shank 3 is higher than that of a shank with a cross-sectional area of the same size and a circular cross-section. Then, the natural frequency of the fastening screw 1 is higher than the resonance frequency occurring normally in a piston engine.

In Figure 2a the cross-sectional shape of the shank 3 is oval. The ratio of the cross-sectional dimensions, i.e. I (length) and w (width), is 1.5 - 3, preferably 2.2 - 2.8. The longitudinal axis 5 of the fastening screw 1 passes via the midpoint of the oval.

In Figure 2b the cross-sectional shape of the shank 3 is quadrangular, preferably rectangular. The short sides of the rectangle may be convex. The ratio of the cross-sectional dimensions, i.e. I (length) and w (width), is 1.5 - 2.5, preferably 1.8 - 2.2. The longitudinal axis 5 of the fastening screw 1 passes via the midpoint of the quadrangle.

In Figure 2c the cross-sectional shape of the shank 3 is triangular, preferably an equilateral triangle. The sides of the triangle may be convex. The longitudinal axis 5 of the fastening screw 1 passes via the midpoint of the triangle.

In Figure 2d the cross-sectional shape of the shank 3 is pentagonal, preferably an equilateral pentagon. The longitudinal axis 5 of the fastening screw 1 passes via the midpoint of the pentagon.

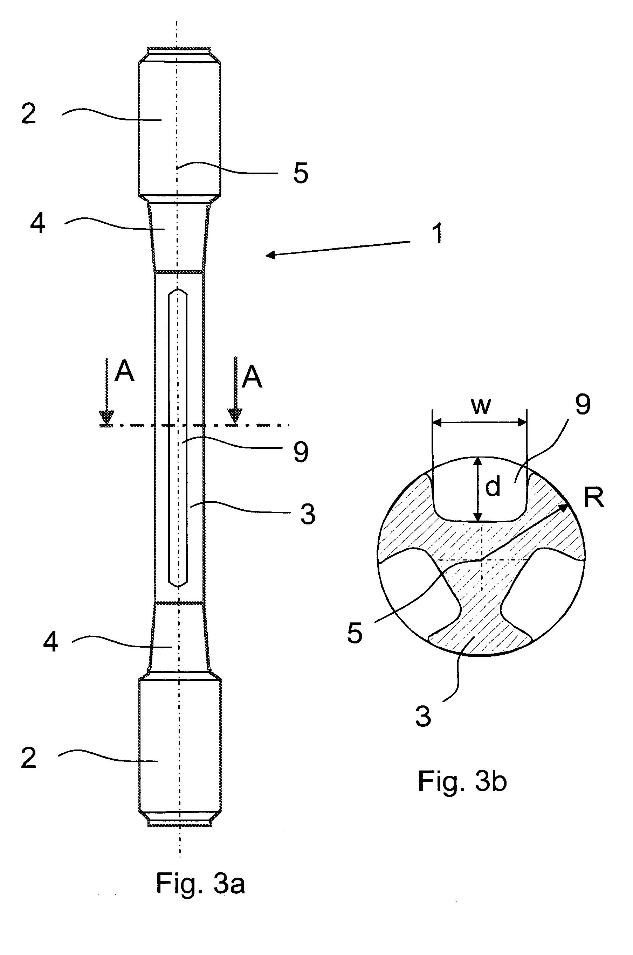

In the embodiment according to Figures 3a and 3b, the shank 3 of the fastening screw 1 is provided with elongated grooves 9, which are parallel with the longitudinal axis 5 of the screw. Elsewhere, the cross-sectional shape of the shank 3 is circular. There are three grooves 9 and they are arranged in angles of 120 degrees with respect to one another. The ratio of the width w of the groove 9 to the radius R of the shank 3 is 0.8 - 1. Similarly, the ratio of the depth d of the groove 9 to the radius R of the shank 3 is 0.4 - 0.6. In this way, the bending stiffness of the shank 3 will be high, whereby the natural frequency of the fastening screw 1 is higher than the resonance frequency occurring typically in a piston engine. In other respects, the fastening screw 1 is similar to the fastening screw shown in Figure 1.

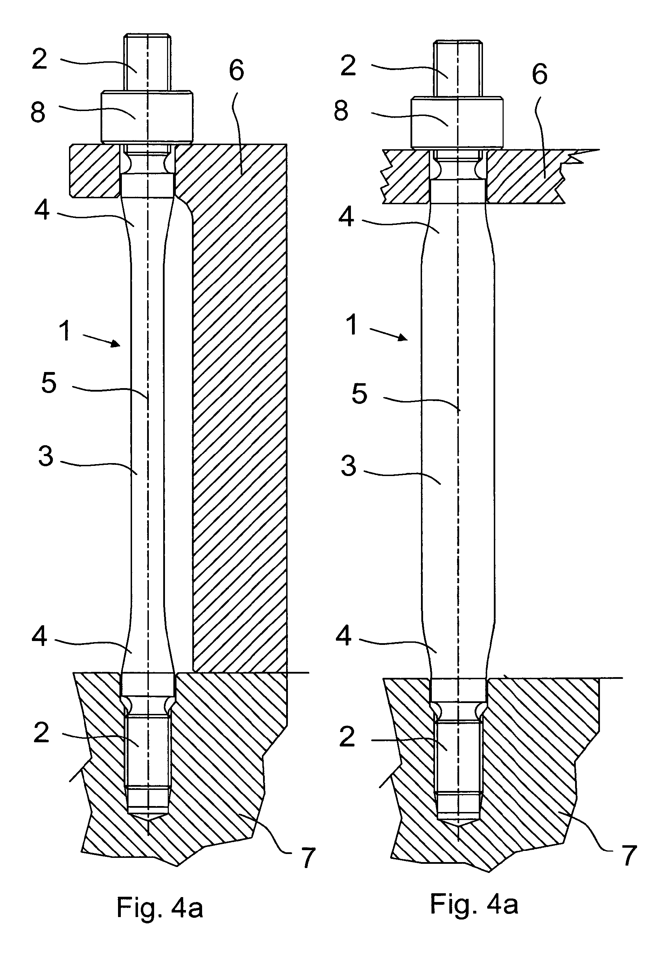

Figure 4a shows a cylinder head 6 attached to an engine block 7 of a piston engine by means of a fastening screw 1 according to the invention and a nut 8. The shank 3 of the fastening screw 1 is narrower than the end sections 2. One end of the fastening screw is screwed in the threads in the engine block 7. The cross-sectional shape of the shank 3 may be similar to the one shown in Figures 2a - 2d or 3b.

Figure 4b shows a fastening screw 1, the shank of which is wider than the end sections 2. In other respects, the fastening screw is similar to the fastening screw shown in Figure 1 or Figure 3. The cross-sectional shape of the shank 3 may be similar to the one shown in Figures 2a - 2d or 3b. The cylinder head 6 is attached to the engine block 7 of a piston engine by means of the fastening screw 1 and a nut 8. The fastening screw 1 may be used, if the mounting order of the cylinder head 6 allows that.

Figures 5a and 5b show a fastening screw 1, one end section 2 of which is provided with threads and the other end section with a screw head 10. The cylinder head 6 is attached to the engine block 7 by means of the fastening screw 1.

All the above-described shapes of the shank 3 of the fastening screw may be provided by forging. The grooves 9 in the shank according to Figures 3a and 3b may also be provided by milling. The fastening screw 1 according to the invention is used especially in piston engines that run at medium speed. The rotational speeds of the engines of this kind are 300 - 1200 r/min. The natural frequency of the fastening screw 1 is smaller and/or higher than the excitation frequency/frequencies generally occurring in the engine. Thus, the vibration of the fastening screw 1 and the damages caused by it are minor. The fastening screw 1 may be used in piston engines also for other purposes than for attaching a cylinder head to an engine block, i.e., for instance as anchor bolts that keep the engine block together. The fastening screw 1 may also be used in other machines and devices, in which vibration occurs at the natural frequency of a screw having a shank with a conventional circular cross-section, or in the vicinity thereof.

## Claims

1. A piston engine comprising an engine block (7) and a cylinder head (6) attached to the engine block (7) by means of fastening screws (1), the fastening screw (1) comprising two end sections (2), at least one of which is provided with threads, and a shank (3) between the end sections (2), **characterised in that** the cross-sectional shape of the shank (3) is oval, quadrangular or pentagonal.

2. The piston engine according to claim 1, **characterised in that** the cross-sectional shape of the shank (3) is oval, and the ratio of the length (I) and width (w) of the cross-section of the shank (3) is 1.5 - 3.

3. The piston engine according to claim 1, **characterised in that** the cross-sectional shape of the shank (3) is quadrangular, and the ratio of the length (I) and width (w) of the cross-section of the shank (3) is 1.5 -2.5.

4. The piston engine according to anyone of the preceding claims, **characterised in that** the shank (3) is provided with elongated grooves (9).

5. The piston engine according to claim 4, **characterised in that** the shank (3) is provided with three elongated grooves (9).

6. The piston engine according to claim 4 or 5, **characterised in that** the ratio of the depth (d) of the groove (9) to the radius (R) of the shank is 0.4 - 0.6.

7. The piston engine according to claim 4, 5 or 6, **characterised in that** the ratio of the width (w) of the groove (9) to the radius (R) of the shank is 0.8 - 1.

8. The piston engine according to anyone of the preceding claims, **characterised in that** the cross-sectional area of the shank (3) is smaller than the cross-sectional area of the end section (2).

9. The piston engine according to anyone of claims 1-7, **characterised in that** the cross-sectional area of the shank (3) is larger than the cross-sectional area of the end section (2).

## Patentansprüche

1. Kolbenmotor, umfassend einen Motorblock (7) und einen Zylinderkopf (6), der durch Befestigungsschrauben (1) an dem Motorblock (7) angebracht ist, wobei die Befestigungsschraube (1) zwei Endabschnitte (2), wovon wenigstens einer mit einem Gewinde versehen ist, und einen Schaft (3) zwischen den Endabschnitten (2) umfasst, **dadurch gekennzeichnet, dass** die Querschnittform des Schafts (3) oval, viereckig oder fünfeckig ist.

2. Kolbenmotor nach Anspruch 1, **dadurch gekennzeichnet, dass** die Querschnittform des Schafts (3) oval ist und das Verhältnis der Länge (1) und der Breite (w) des Querschnitts des Schafts (3) 1,5 bis 3 beträgt.

3. Kolbenmotor nach Anspruch 1, **dadurch gekennzeichnet, dass** die Querschnittform des Schafts (3) viereckig ist und das Verhältnis der Länge (1) und der Breite (w) des Querschnitts des Schafts (3) 1,5 bis 2,5 beträgt.

4. Kolbenmotor nach einem der vorhergehenden Ansprüche, **dadurch gekennzeichnet, dass** der Schaft (3) mit Längsnuten (9) versehen ist.

5. Kolbenmotor nach Anspruch 4, **dadurch gekennzeichnet, dass** der Schaft (3) mit drei Längsnuten (9) versehen ist.

6. Kolbenmotor nach Anspruch 4 oder 5, **dadurch gekennzeichnet, dass** das Verhältnis der Tiefe (d) der Nut (9) zu dem Radius (R) des Schafts 0,4 bis 0,6 beträgt.

7. Kolbenmotor nach Anspruch 4 oder 5, **dadurch gekennzeichnet, dass** das Verhältnis der Breite (w) der Nut (9) zu dem Radius (R) des Schafts 0,8 bis 1 beträgt.

8. Kolbenmotor nach einem der vorhergehenden Ansprüche, **dadurch gekennzeichnet, dass** die Querschnittfläche des Schafts (3) kleiner als die Querschnittfläche des Endabschnitts (2) ist.

9. Kolbenmotor nach einem der Ansprüche 1 bis 7, **dadurch gekennzeichnet, dass** die Querschnittfläche des Schafts (3) größer als die Querschnittfläche des Endabschnitts (2) ist.

## Revendications

1. Moteur à pistons comprenant un bloc moteur (7) et une tête de cylindre (6) fixée au bloc moteur (7) au moyen de vis de fixation (1), la vis de fixation (1) comprenant deux sections d'extrémité (2) dont au moins une est dotée de filets, et une tige (3) entre les deux sections (2), **caractérisé en ce que** la forme en section transversale de la tige (3) est ovale, quadrangulaire ou pentagonale.

2. Moteur à pistons selon la revendication 1, **caractérisé en ce que** la forme en section transversale de la tige (3) est ovale, et le rapport de la longueur (1) et de la largeur (w) de la section transversale de la tige (3) est de 1,5 - 3.

3. Moteur à pistons selon la revendication 1, **caractérisé en ce que** la forme en section transversale de la tige (3) est quadrangulaire, et le rapport de la longueur (1) et de la largeur (w) de la section transversale de la tige (3) est de 1,5 - 2,5.

4. Moteur à pistons selon l'une quelconque des revendications précédentes, **caractérisé en ce que** la tige (3) est dotée de rainures allongées (9).

5. Moteur à pistons selon la revendication 4, **caractérisé en ce que** la tige (3) est dotée de trois rainures allongées (9).

6. Moteur à pistons selon la revendication 4 ou 5, **caractérisé en ce que** le rapport de la profondeur (d) de la rainure (9) au rayon (R) de la tige est de 0,4 - 0,6.

7. Moteur à pistons selon la revendication 4, 5 ou 6, **caractérisé en ce que** le rapport de la largeur (w) de la rainure (9) au rayon (R) de la tige est de 0,8 - 1.

8. Moteur à pistons selon l'une quelconque des revendications précédentes, **caractérisé en ce que** la surface en section transversale de la tige (3) est plus petite que la surface en section transversale de la section d'extrémité (2).

9. Moteur à pistons selon l'une quelconque des revendications 1 à 7, **caractérisé en ce que** la surface en section transversale de la tige (3) est plus grande que la surface en section transversale de la section d'extrémité (2).
